# EUROPEAN PATENT SPECIFICATION

(11) **EP 2 957 198 B1**
(45) Date of publication and mention of the grant of the patent: **08.03.2017**
(21) Application number: 14193567.6
(22) Date of filing: 18.11.2014
(51) Int. Cl.: A47J 31/36, A47J 31/40, A47J 31/44

(54) **Coffee machine**
Kaffeemaschine
Machine à café

(30) Priority: 16.06.2014 CN 201410266134
(43) Date of publication of application: 23.12.2015
(73) Proprietor: NingBo LvZhiPin Electrical Appliance Science and Technology Co., Ltd, NingBo Yuyao City, Zhejiang 315400 (CN)
(72) Inventor: Lu, DingYao, 315400 NingBo Yuyao City, Zhejiang Province, (CN); Wang, WeiMing, 315400 NingBo Yuyao City, Zhejiang Province (CN)
(74) Representative: 2K Patentanwälte Blasberg Kewitz & Reichel

(56) References cited:
- CH-A2- 700 288
- US-A1- 2013 189 400

## Description

### BACKGROUND

### 1. Technical Field

The disclosure relates to the field of auto-mated coffee machines, and in particular concerns a coffee machine for coffee capsules with simplified and space-saving configuration.

### 2. Description of Related Art

The coffee machine is met with general rejoicing in more and more families, because it is convenient for peoples' life. In general, the coffee machine comprises a grinder, and a brewing unit. The coffee in bean form is first ground in the grinder to form coffee powder, and then, the coffee powder in placed into the brewing unit and compacted therein. Thereafter, pressurized hot water is then supplied through the brewing unit to make coffee. Therefore, this would mean that sufficient space would always have to remain for the grinder and the brewing unit, which causes great difficulty in moving the aforementioned coffee machine.

In view of this, the coffee machine for coffee capsule is gained in popularity of people because of moving convenient. However, the coffee machine for coffee capsules provides a pricking member to prick the coffee capsule, and a container to receive capsule shell, which adds the complexity and difficulty of configuration, and also needs more space.

### SUMMARY OF THE INVENTION

The main object of the present disclosure is to provide an enhanced coffee machine with simplified and space-saving configuration.

The problem is solved by a coffee machine for coffee capsules according to claim 1. Further advantageous embodiments are the subject-matter of the dependent claims.

According to the present invention it is not necessary anymore to provide a pricking member in a coffee machine for coffee capsules to prick the coffee capsule, and to provide furthermore a container to receive the capsule shells. Thus, according to the present invention space is saved and the total number of parts of the coffee machine can be reduced.

According to the present invention a coffee machine for coffee capsules comprises a casing comprising a side panel, the side panel defining a fixing hole and a mounted hole; a capsule holder accommodated in the casing for receiving only one coffee capsule, the capsule holder defining a through hole for flowing waste water away from the capsule holder; a brewing unit comprising a brewing chamber and a plurality of water jets (water nozzles), each water jet (nozzle) defining a channel communicating with the brewing chamber; a waste water container defining a cavity, and comprising a tongue, the tongue defining a water groove communicating with the cavity; and a water tank, a boiler, a pump, and a plurality of pipes; wherein the water tank, the boiler, the pump, a plurality of pipes, and the capsule holder are accommodated in the casing, the water tank, the boiler, the pump and the capsule holder are connected one by one via the pipes; an end of one pipe extends into the capsule holder is outlet; the brewing unit is pivotally mounted to the side panel, the capsule holder is mounted to the side panel and communicating with the fixing hole; when the brewing unit is pivoted towards to the capsule holder, the brewing unit push the coffee capsule towards the outlet, resulting in the outlet and the water jets breaking the coffee capsule; and then, hot water flows from the outlet to brew coffee; the tongue is detachably mounted to the mounted hole, and the waste water flows into the cavity via the water groove.

Preferably, the casing defines a receiving space for accommodating the water tank, the boiler, the pump, a plurality of pipes, and the capsule holder; wherein the boiler is located below the water tank; the casing comprises a sliding panel configured for sliding toward or away from the receiving space, and the water tank is fixed to the sliding panel.

Preferably, the brewing unit comprises a main body and a resisting member, wherein the brewing chamber is located in a center of the main body, the resisting member is mounted and covered the brewing chamber for pushing the coffee capsule, and the water jets are mounted to the resisting member.

Preferably, the side panel defines a locking hole, the brewing unit comprises an elastic lock fixed to the main body, and the elastic lock is engaged in the locking hole.

Preferably, the elastic lock is substantially V-shaped, the main body defines a slot, one ends of the elastic lock is mounted to the main body, the other end of the elastic lock is passed through the slot to engage in the locking hole.

Preferably, the main body forms a mounted portion opposite to the elastic lock, wherein the mounted portion is pivotably mounted to the side panel.

Preferably, the main body defines a coffee outlet communicating with the brewing chamber.

Preferably, the main body defines a fixing groove, wherein the tongue is selectively mounted to the fixing groove, with the waste water container abutting the side panel.

Preferably, the tongue, the fixing groove, and the mounted holes all comprise a magnet.

Preferably, an outer side of the resisting member or an inner surface of the capsule holder is fitted about a ring pad.

Preferably, one side of the waste water container defines a receiving recess, and a bottom of receiving recess defines a hole, the receiving recess communicates with the cavity via the hole.

### BRIEF DESCRIPTION OF THE DRAWINGS

Many aspects of the present embodiments can be better understood with reference to the following drawings. The components in the drawings are not necessarily drawn to scale, the emphasis instead being placed upon clearly illustrating the principles of the present embodiments. Moreover, in the drawings, all the views are schematic, and like reference numerals designate corresponding parts throughout the several views.
FIG. 1 is an exploded, isometric view of a coffee machine.
FIG. 2 is an assembled, isometric view of the coffee machine of FIG. 1, wherein the coffee machine includes a brewing unit in an opened state, and a waste water container.
FIG. 3 is an isometric view of the brewing unit.
FIG. 4 is an isometric view of the waste water container.
FIG. 5 is a right view of the waste water container of FIG. 4.

### DETAILED DESCRIPTION OF THE INVENTION

The disclosure, including the accompanying drawings, is illustrated by way of examples and not by way of limitation. It should be noted that references to "an" or "one" embodiment in this disclosure are not necessarily to the same embodiment, and such references mean "at least one."

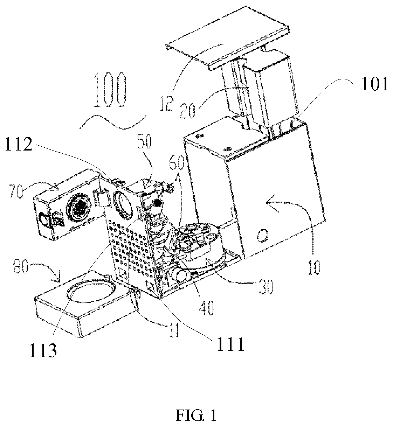

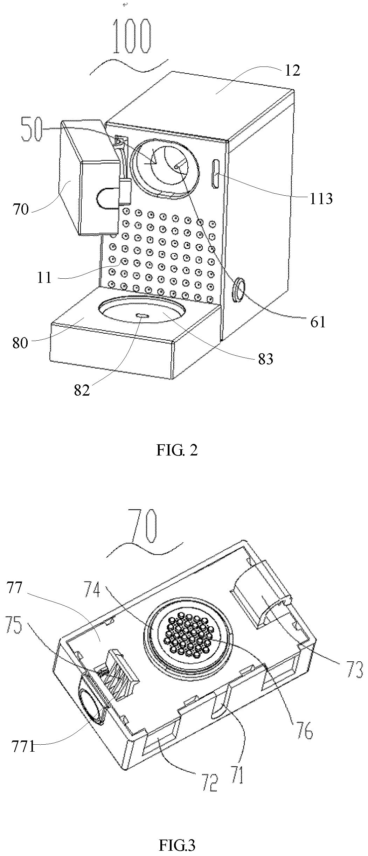

Referring to FIG. 1 and FIG. 2, a coffee machine 100 for coffee capsules according to a preferred embodiment of the invention includes a casing 10, a water tank 20, a boiler 30, a pump 40, a capsule holder 50, a plurality of pipes 60, a brewing unit 70, and a waste water container 80.

The casing 10 forms a receiving space 101 therein. The casing 10 includes a side panel 11 and a sliding panel 12, around the receiving apace 101; in other ward, the side panel 11 and the sliding panel 12 are two walls of the receiving space 101. The side panel 11 defines a fixing hole 111, at least one mounted hole 112, and a locking hole 113 thereof. The fixing hole 111 and the mounted hole 112 are located at opposite ends of the side panel 11. The locking hole 113 is adjacent to the fixing hole 111. The sliding panel 12 is operated to be inserted or to move away from the receiving space 101. The capsule holder 50 is configured for receiving only one coffee capsule, is mounted into the fixing hole 111, and accommodated in the receiving space 101. The waste water container 80 is detachably mounted to the mounted hole 112, outside of the receiving space 101.

The water tank 20 is mounted to the sliding panel 12. The water tank 20 slides with the sliding panel 12 to be received inside or outside of the receiving space 101, for conveniently filling clean water thereinto.

The boiler 30 is mounted in the receiving space 101, below the water tank 20. The boiler 30 is connected to the water tank 20 by one of the pipes 60, so that the cold water in the water tank 20 can flow into the boiler 30 under the influence of gravity. Then, the boiler 30 heats the cold water to boiling water for brewing coffee powder of a coffee capsule. In the other embodiment, the pump 40 is connected to the boiler 30 and the water tank 20, and the pump 40 pressurizes the cold water to flow into the boiler 30.

The pump 40 is mounted in the receiving space 101, below the capsule holder 50, for pumping the water to flow between the boiler 30 and the capsule holder 50 smoothly. In this embodiment, the pump 40 is connected to the boiler 30 and the capsule holder 50 by pipes 60, for drawing boiling water from the boiler 30 to flow into the capsule holder 50. In this embodiment, one end of the pipe 60 extended into the water tank 20 is defined as an inlet, and the other end of the pipe 60 extended into the capsule holder 50 is defined as an outlet 61. Therefore, during operation for making coffee, the cold water flows into the boiler 30 from the water tank 20 via the inlet, and then, the boiler 30 heats the cold water to boiling water. Thereafter, the boiling water flows into the capsule holder 50 via outlet 61to brew coffee powder in a capsule.

The capsule holder 50 is sleeve-shaped, and the capsule holder 50 includes an opened end and a sealed end. The sealed end defines a fasten hole for the outlet 61 passing through, and fastening the outlet 61. The capsule holder 50 defines a through hole (not labeled) for emitting the waste water away from the capsule holder 50. The opened end is fixed to the fixing hole 112. In the other embodiment, the capsule holder 50 is mounted to side panel 11, with aligning and communicating with the fixing hole 112. In the other embodiment, the configuration of the coffee machine is simple because the capsule holder 50 is formed on the side panel 11, thereby reducing the number of parts and steps required for installing the capsule holder 50. Particularly, the opened end of the capsule holder 50 is formed on the side panel 11, with aligning and communicating with the fixing hole 112; and then extends to form the sealed end of the capsule holder 50.

Referring to FIG. 1 and FIG. 3, the brewing unit 70 included a main body 77 against the side panel 11, a mounted portion 73 pivotably mounted to the side panel 11, a resisting member 74, and an elastic lock 75. An inner surface of the main body 77, facing the side panel 11, defines a brewing chamber (not shown in the figures) in a center thereon. The resisting member 74 is mounted to the brewing chamber, and is hermetically covered the brewing chamber. Preferably, an outer side of the resisting member 74 or an inner surface of the capsule holder 50 is fitted about a ring pad (not shown in the figures). A plurality of water jets (nozzles) 76 are mounted on the resisting member 74. Each water jet 76 defines a channel (not shown in the figures) in communication with the brewing chamber. The resisting member 74 defines a plurality of holes communicating with the brewing chamber. A first side surface connected to the inner surface of the main body 77 defines a coffee outlet 71 communicating with the brewing chamber, and at least one fixing groove 72 sets at a side of the coffee outlet 71. The mounted portion 73 and the elastic lock 75 are opposite to each other, and all extend from the inner surface of the main body 77. Specifically, the mounted portion 73 is ring-shaped, and formed on the inner surface of the main body 77, adjacent to the first end of the main body 77. The second end of main body 77 defines a slot 771 through the inner surface and a second side surface of the main body 77. The elastic lock 75 is substantially V-shaped. One ends of the elastic lock 75 is mounted to the main body 77, substantially coplanar with the second surface of the main body 77, for bounding the elastic lock 75 conveniently. The other end of the elastic lock 75 bends and passes through the slot 771 to exposed outside the inner surface of the main body 77, for locking to the locking hole 113.

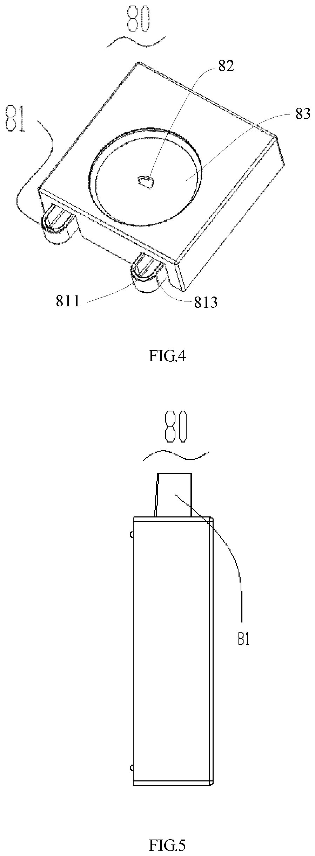

Referring to FIG. 4 and FIG. 5, the waste water container 80 defines a cavity (not shown in the figures), and a hole 82 communicating with the cavity. A top side of the waste water container 80 defines a receiving recess 83. The hole 82 is defines on the button of the receiving recess 83, so that the receiving recess 83 is communication with the cavity via the hole 82. At least one tongue 81 extends from a first side of the waste water container 80 to fasten to the mounted hole 112 or the fixing groove 72. The tongue 81 defines a water groove 811 communicating with the cavity. A top pat of walls of the water groove 811 is a wedge-shaped, for conveniently and tightly mounted in the mounted hole 112 or the fixing groove 72.

Referring to FIG. 1 and FIG. 2 again, in assembling the coffee machine 100, the water tank 20, the boiler 30, the pump 40, the capsule holder 50, and the plurality of pipes 60 are fixed in the casing 10 according to the aforementioned description. The brewing unit 70 is pivotably mounted to the side panel 11 via the mounted portion 73. The tongue 81 is detachably locked to the fixing groove 72, with the top side of the waste water container 80 abutting with the side panel 11. In another embodiment, the waste water container 80 comprises a plurality of tongues 81; a part of tongues 81 are detachably locked to the fixing groove 72, and the other part of tongues 81 are detachably locked to the corresponding mounted holes 112. Therefore, the waste water container 80 is detachably fixed to the side panel 11, but not fixed in the casing 10, which saves space, and is convenient for packaging and transport. In another embodiment, the fixing groove 72 and the mounted holes 112 includes a magnet, correspondingly, the tongue 81 or the first side of the waste water container 80 forming the tongue 81 also includes a magnet. Therefore, the great force of the magnets results in the waste water container 80 mounted to the casing 10 tightly.

Referring to FIG. 1 and FIG. 2 again, when the coffee machine 100 is used to make coffee, a coffee capsule is inserted into the capsule holder 50 from the fixing hole 111. The waste water container 80 is removed from the side panel 11, and the tongue 81 are mounted to the mounted hole 112, with the water groove 811 below the through hole of the capsule holder 50 or the water groove 811 connecting with the through hole of the capsule holder 50 via a pip. Therefore, the waste water of cleaning the capsule holder 50 can flow into the cavity of the waste water container 80 via the water groove 811 and the through hole. The brewing unit 70 is pivoted towards the side panel 11 to resist against the side panel and cover the fixing hole 111, with the resisting member 74 moving to engage in the fixing hole 111, and the elastic lock 75 engaging in the locking hole 113. In the meanwhile, the resisting member 74 pushes the coffee capsule so that it is moved to the sealed end of the capsule holder 50, consequently, the outlet 61 pricks the coffee capsule, together with the water jets 76. Thereafter, pressurized hot water in the boiler 30 is then supplied through the outlet 61, the water jets 76 and the holes in the resisting member 74 into the brewing chamber, together with the coffee powder. The capsule shell of the coffee capsule is left in the capsule holder 50. As a result, hot coffee is formed in the brewing chamber, and then, the hot coffee flows into a cup out of the coffee outlet 71. The receiving recess 83 below the coffee outlet 71 can receive the hot coffee overflow the cup or the brewing chamber. Additionally, the receiving recess 83 can also receive the waste water overflowing from the cavity via the hole 82. In other words, the receiving recess 83 can reminds people to pour the waste water away while the waste water overflows from the cavity via the hole 82. After making the coffee, the brewing unit 70 is pivoted away from the side panel 11 to open the fixing hole 111, then, the capsule shell of the coffee capsule can be taken off the capsule holder 50. Therefore, according to the aforementioned description, the outlet 61 in the capsule holder 50 and the water jets 76 fixed to the brewing unit 70 is used to prick the coffee capsule, and the capsule holder 50 is also a container to receive the capsule shell of the coffee capsule. Therefore, it is not necessary to provide a separate pricking member to prick the coffee capsule, and to provide a separate container to receive the capsule shell, which can save space and help reducing the total number of parts of the coffee machine 100.

It is to be understood, however, that even though numerous characteristics and advantages of certain embodiments have been set forth in the foregoing description, together with details of the structures and functions of the embodiments, the disclosure is illustrative only, and changes may be made in detail, especially in the matters of shape, size, and arrangement of parts within the principles of the disclosure to the full extent indicated by the broad general meaning of the terms in which the appended claims are expressed.

## Claims

1. A coffee machine for coffee capsule, comprising:
a casing (10) comprising a side panel (12), the side panel defining a fixing hole (111) and a mounted hole (112);
a capsule holder (50) accommodated in the casing for receiving only one coffee capsule, the capsule holder defining a through hole for flowing waste water away from the capsule holder;
a brewing unit (70) comprising a brewing chamber and a plurality of water jets (76), each water jet defining a channel communicating with the brewing chamber;
a waste water container (80) defining a cavity, and comprising a tongue (81), the tongue defining a water groove (811) communicating with the cavity; and
a water tank (20), a boiler (30), a pump (40), and a plurality of pipes (60);
wherein the water tank, the boiler, the pump, a plurality of pipes, and the capsule holder are accommodated in the casing (10), the water tank, the boiler, the pump and the capsule holder are connected one by one via the pipes; an end of one pipe (60) extended into the capsule holder (50) is defined as an outlet; the brewing unit is pivotally mounted to the side panel, the capsule holder is mounted to the side panel and communicating with the fixing hole; wherein, when the brewing unit is pivoted towards to the capsule holder, the brewing unit pushes the coffee capsule towards the outlet, resulting in the outlet and the water jets breaking the coffee capsule; and then, hot water flows from the outlet to brew coffee; the tongue is detachably mounted to the mounted hole, and the waste water flows into the cavity via the water groove.

2. The coffee machine of claim 1, wherein the casing defines a receiving space accommodating the water tank, the boiler, the pump, a plurality of pipes, and the capsule holder; the boiler is located below the water tank; the casing comprises a sliding panel configured for sliding toward or away from the receiving space, and the water tank is fixed to the sliding panel.

3. The coffee machine of claim 1 or 2, wherein the brewing unit comprises a main body and a resisting member, the brewing chamber is located in a center of the main body, the resisting member is mounted on and covered by the brewing chamber for pushing the coffee capsule, and the water jets are mounted to the resisting member.

4. The coffee machine of any of the preceding claims, wherein the side panel defines a locking hole, the brewing unit comprises an elastic lock fixed to the main body, and the elastic lock is engaged in the locking hole.

5. The coffee machine of claim 4, wherein the elastic lock is substantially V-shaped, the main body defines a slot, one ends of the elastic lock is mounted to the main body, the other end of the elastic lock is passed through the slot to engaged in locking hole.

6. The coffee machine of any of the preceding claims, wherein the main body forms a mounted portion opposite to the elastic lock, the mounted portion is pivotably mounted to the side panel.

7. The coffee machine of any of the preceding claims, wherein the main body defines a coffee outlet communicating with the brewing chamber.

8. The coffee machine of any of the preceding claims, wherein the main body defines a fixing groove, the tongue is selectively mounted to the fixing groove, with the waste water container abutting the side panel.

9. The coffee machine of claim 8, wherein the tongue, the fixing groove, and the mounted holes all comprise a magnet.

10. The coffee machine of any of the preceding claims, wherein an outer side of the resisting member or an inner surface of the capsule holder is fitted about a ring pad.

11. The coffee machine of any of the preceding claims, wherein a top side of the waste water container defines a receiving recess, and a bottom of receiving recess defines a hole, the receiving recess communicates with the cavity via the hole.

## Patentansprüche

1. Kaffeemaschine für Kaffeekapseln, umfassend:
ein Gehäuse (10) mit einer Seitenwand (12), wobei die Seitenwand ein Befestigungsloch zu definieren (111) und ein Montagloch (112) festlegt;
einen Kapselhalter (50), der in dem Gehäuse untergebracht ist, um nur eine Kaffeekapsel aufzunehmen, wobei der Kapselhalter ein Durchgangsloch zum Abfließen von Abwasser weg von dem Kapselhalter festlegt;
eine Brüheinheit (70) mit einer Brühkammer und einer Mehrzahl von Wasserdüsen (76), wobei jede Wasserdüse einen Kanal festlegt, der mit der Brühkammer in Verbindung steht;
einen Abwasserbehälter (80), der einen Hohlraum festlegt und eine Zunge (81) aufweist, wobei die Zunge eine Wasserrille (811) festlegt, die mit dem Hohlraum in Verbindung steht; und
einen Wasserbehälter (20), einen Heißwasserbereiter (30), eine Pumpe (40) und eine Mehrzahl von Rohren (60);
wobei der Wasserbehälter, der Heißwasserbereiter, die Pumpe, eine Mehrzahl von Rohren und der Kapselhalter in dem Gehäuse (10) untergebracht sind, der Wasserbehälter, der Heißwasserbereiter, die Pumpe und der Kapselhalter miteinander über die Rohre verbunden sind; ein Ende eines Rohres (60), das sich bis in den Kapselhalter (50) hinein erstreckt, als ein Auslass festgelegt ist; die Brüheinheit schwenkbar an der Seitenwand angebracht ist, der Kapselhalter an der Seitenwand angebracht ist und mit dem Befestigungsloch in Verbindung steht; wobei, wenn die Brüheinheit in Richtung auf den Kapselhalter geschwenkt wird, die Brüheinheit die Kaffeekapsel hin zum Auslass drückt, was dazu führt, dass der Auslass und die Wasserdüsen die Kaffeekapsel aufbrechen; und wobei dann heißes Wasser aus dem Auslass strömt, um Kaffee aufzubrühen; wobei die Zunge lösbar an dem Montagloch angebracht ist und wobei das Abwasser über die Wasserrille in den Hohlraum fließt.

2. Kaffeemaschine nach Anspruch 1, wobei das Gehäuse einen Aufnahmeraum festlegt, der den Wasserbehälter, den Heißwasserbereiter, der Pumpe, eine Mehrzahl von Rohren und den Kapselhalter aufnimmt; wobei der Heißwasserbereiter unterhalb des Wasserbehälters angeordnet ist; das Gehäuse eine Schiebewand aufweist, die ausgelegt ist, um in Richtung des Aufnahmeraums oder weg von diesem verschoben zu werden, und wobei der Wasserbehälter an der der Schiebewand befestigt ist.

3. Kaffeemaschine nach Anspruch 1 oder 2, wobei die Brüheinheit einen Hauptkörper und ein Widerstandselement aufweist, wobei die Brühkammer sich im Zentrum des Hauptkörpers befindet, das Widerstandselement auf der Brühkammer befestigt ist und von dieser abgedeckt ist, um die Kaffeekapsel vorzuschieben, und wobei die Wasserdüsen auf de, Widerstandselement angebracht sind.

4. Kaffeemaschine nach einem der vorhergehenden Ansprüche, wobei die Seitenwand eine Verriegelungsöffnung festlegt, wobei die Brüheinheit einen elastischen Riegel aufweist, der an dem Hauptkörper befestigt ist, und wobei der elastische Riegel mit dem Verriegelungsloch in einem Eingriff steht.

5. Kaffeemaschine nach Anspruch 4, wobei der elastische Riegel im Wesentlichen V-förmig ist, der Hauptkörper einen Schlitz festlegt, ein Ende des elastischen Riegels an dem Hauptkörper angebracht ist, das andere Ende des elastischen Riegels sich durch den Schlitz hindurch erstreckt, um mit dem Verriegelungsloch in einem Eingriff zu stehen.

6. Kaffeemaschine von einem der vorhergehenden Ansprüche, wobei der Hauptkörper einen Befestigungsabschnitt gegenüberliegend zu dem elastischen Riegel ausbildet, wobei der Befestigungsabschnitt schwenkbar an der Seitenwand angebracht ist.

7. Kaffeemaschine nach einem der vorhergehenden Ansprüche, wobei der Hauptkörper einen Kaffee-Auslass festlegt, der mit der Brühkammer in Verbindung steht.

8. Kaffeemaschine nach einem der vorhergehenden Ansprüche, wobei der Hauptkörper eine Befestigungsrille festlegt, die Zunge gezielt an der Befestigungsrille angebracht ist, wobei der Abwasser-Behälter an der Seitenwand anliegt.

9. Kaffeemaschine nach Anspruch 8, wobei die Zunge, die Befestigungsrille und das Montageloch alle einen Magneten aufweisen.

10. Kaffeemaschine nach einem der vorhergehenden Ansprüche, wobei eine Außenseite des Widerstandselements oder eine Innenseite des Kapselhalters um eine Ringauflage herum eingepasst sind.

11. Kaffeemaschine nach einem der vorhergehenden Ansprüche, wobei eine Oberseite des Abwasserbehälters eine Aufnahmevertiefung festlegt und ein Boden der Aufnahmevertiefung ein Loch festlegt, wobei die Aufnahmevertiefung mit dem Hohlraum über das Loch in Verbindung steht.

## Revendications

1. Une machine à café à capsules de café, comprenant:
un boîtier (10) comprenant un panneau latéral (12), le panneau latéral définissant un trou de fixation (111) et un trou de montage (112);
un porte-capsule (50) logé dans le boîtier destiné à recevoir une unique capsule de café, le porte-capsule définissant un trou traversant pour permettre l'écoulement des eaux usées à distance du porte-capsule;
une unité de percolation (70) comprenant une chambre de percolation et une pluralité de jets d'eau (76), chaque jet d'eau définissant un canal communiquant avec la chambre de percolation;
un réservoir d'eaux usées (80) définissant une cavité, et comprenant une languette (81), la languette définissant une rainure d'eau (811) communiquant avec la cavité; et un réservoir d'eau (20), une chaudière (30), une pompe (40), et une pluralité de conduits (60);
dans lequel le réservoir d'eau, la chaudière, la pompe, une pluralité de conduits, et le porte-capsule sont logés au sein du boîtier (10), le réservoir d'eau, la chaudière, la pompe et le support de capsule sont connectés un par un au moyen des conduits ; une extrémité d'un conduit (60) se prolongeant dans le porte-capsule (50) étant défini comme sortie, l'unité de percolation est monté de façon pivotante sur le panneau latéral, le porte-capsule est monté sur le panneau latéral et communique avec le trou de fixation; dans lequel, lorsque l'unité de percolation est amenée à pivoter vers le porte-capsule, l'unité d'infusion pousse la capsule de café vers la sortie, ce qui entraîne la sortie et les jets d'eau rompant la capsule du café; puis, l'eau chaude coule de la sortie pour extraire le café; la languette est montée de manière amovible dans le trou monté, et l'eau usée coule dans la cavité par l'intermédiaire de la rainure d'eau.

2. La machine à café selon la revendication 1, dans laquelle le boîtier définit un espace de réception pour y loger le réservoir d'eau, la chaudière, la pompe, une pluralité de tubes, et le porte-capsule; la chaudière est située au-dessous du réservoir d'eau; le boîtier comprend un panneau coulissant configuré pour coulisser depuis ou vers l'espace de réception, et le réservoir d'eau est fixé au panneau coulissant.

3. La Machine à café selon la revendication 1 ou 2, dans laquelle l'unité d'infusion comprend un corps principal et un élément résistant, la chambre de percolation est située au centre du corps principal, l'élément résistant est monté et recouvert par la chambre de percolation pour pousser le capsule de café, et les jets d'eau sont montés sur l'élément résistant.

4. La machine à café selon l'une quelconque des revendications précédentes, dans
lequel le panneau latéral définit un trou de verrouillage, l'unité de percolation comprend un verrou élastique fixé sur le corps principal et le verrou élastique est engagé dans le trou de verrouillage.

5. La machine à café selon la revendication 4, dans lequel le verrou élastique est sensiblement en forme de V, le corps principal définit une fente, l'une des extrémités du verrou élastique est monté sur le corps principal, l'autre extrémité du verrou élastique est passé au travers de la fente pour s'engager dans le trou de verrouillage.

6. La machine à café selon l'une quelconque des revendications précédentes, dans
laquelle le corps principal forme une partie montée opposée au verrou élastique, la partie montée est monté de façon pivotante sur le panneau latéral.

7. La machine à café selon l'une quelconque des revendications précédentes, dans
laquelle le corps principal définit une sortie de café communiquant avec la chambre de percolation.

8. La machine à café selon l'une des revendications précédentes, dans laquelle le corps principal définit une rainure de fxation, la languette est montée de manière sélective à la rainure de fixation, avec le réservoir d'eaux usées venant en butée contre le panneau latéral.

9. La Machine à café selon la revendication 8, dans laquelle la languette, la rainure de fixation, et les trous montés comportent tous un aimant.

10. La machine à café selon l'une quelconque des revendications précédentes, dans laquelle un côté extérieur de l'élément de résistance ou une surface intérieure du porte-capsule est équipé d'un tampon en anneau.

11. La machine à café selon l'une quelconque des revendications précédentes, dans
lequel une partie supérieure du réservoir d'eaux usées définit une cavité de collecte, et le fond de la cavité de collecte définit un trou, la cavité de collecte communique avec la cavité par le trou.
